# EUROPÄISCHE PATENTSCHRIFT

(11) **EP 1 475 223 B1**
(45) Veröffentlichungstag und Bekanntmachung des Hinweises auf die Patenterteilung: **06.04.2011**
(21) Anmeldenummer: 04010050.5
(22) Anmeldetag: 28.04.2004
(51) Int. Cl.: B32B 7/02, B32B 3/30, B65D 75/58

(54) **Verbundfolie für Aufreissverpackungen und Verfahren zu ihrer Herstellung**
Laminated sheet for tearable packagings and method of obtention
Feuille composite pour emballages déchirables et procédé d'obtention

(30) Priorität: 08.05.2003 DE 10320429
(43) Veröffentlichungstag der Anmeldung: 10.11.2004
(73) Patentinhaber: Nordenia Deutschland Halle GmbH, 33790 Halle (DE)
(72) Erfinder: Hamulski, Markus, 48499 Gronau-Epe (DE); Herbert, Bader Dr., 48565 Steinfurt-Borghorst (DE)
(74) Vertreter: Albrecht, Rainer Harald

(56) Entgegenhaltungen:
- EP-A- 0 081 791
- EP-A- 0 812 782
- DE-A- 10 056 811
- US-A- 4 567 986
- US-A- 5 158 499

## Beschreibung

Die Erfindung betrifft eine Aufreißverpackung mit einer Verbundfolie, wobei die Verbundfolie eine die Verpackungsinnenseite bildende Innenfolie aus einem zähen Kunststoff und eine auf die Innenfolie aufkaschierte ein- oder mehrschichtigen Außenfolie, die eine im Vergleich zur Innenfolie geringere Zähigkeit besitzt, aufweist.

Für Aufreißverpackungen werden vielfach Verbundfolien verwendet, die eine die Verpackungsinnenseite bildende zähe Innenschicht aus einem Polyolefin und eine die Verpackungsaußenseite bildende Außenschicht aus Polyester (PET) oder einem Polyester/Metallfolien-Verbund aufweisen. Zum Öffnen der Aufreißverpackung sind Aufreißhilfen in Form von Aufreißkerben oder -schnitten, Aufreißstreifen oder Laserperforationen vorgesehen. Bei einer Innenfolie aus einem zähen Kunststoff funktionieren die bekannten Aufreißhilfen nicht zuverlässig mit der Folge, dass die Aufreißverpackung beim Öffnen unkontrolliert einreißt.

Die EP 0 812 782 A1 betrifft eine Verbundbahn von abziehbaren Deckeln für thermoplastische Behälter. Die Verbundbahn umfasst einen äußeren Film aus Aluminium oder einem gleichwertigen Material sowie einen inneren Film, der aus einem thermoplatischen Material hergestellt ist, welches nach einem Heißsiegeln auf dem Rand der Behälter anzuhaften vermag. Um den inneren Film mit dem äußeren Film zu verbinden, ist eine Zwischenschicht vorgesehen, die Zonen unterschiedlicher Bindungsfähigkeit umfasst. Nach dem Verschließen eines Behälters mit dem Deckel erfolgt eine Öffnung durch ein Abziehen des äußeren Films von dem inneren Film, also einer Delamination der Verbundbahn. Eine Öffnung in dem Deckel wird dadurch gebildet, dass der innere Film einen gekrümmten und geschlossenen eingeschnittenen Schlitz umfasst. Dieser Schlitz wird nach der Verbindung vom äußeren Film und inneren Film durch ein Aufschmelzen erreicht. Da beim Öffnungsvorgang der äußere Film von dem inneren Film abgezogen wird und der innere Film im Bereich zur bildenden Öffnung vollständig eingeschnitten ist, erfolgt kein Zerreißen des äußeren Films, des inneren Films oder der Verbundbahn.

Die DE 100 56 811 A1 betrifft die Verwendung eines Folienmaterials mit einer gelaserten Sollreißlinie zum Verpacken von kegel- oder kegelstumpfförmigen Speiseeiswaffeltüten. Das Folienmaterial kann mehrschichtig ausgebildet sein, wobei an der Innenseite üblicherweise Papier als Trägermaterial vorgesehen ist. Auf das Trägermaterial ist bei einer mehrschichtigen Ausgestaltung eine Außenfolie aus Metall oder Kunststoff aufkaschiert. Um eine Sollreißlinie zu erzeugen, wird das innen liegende Trägermaterial mittels eines Laserstrahls eingekerbt.

Der Erfindung liegt die Aufgabe zugrunde, eine Aufreißverpackung anzugeben, die beim Öffnen entlang einer vorbestimmten Aufreißlinie einreißt.

Diese Aufgabe wird durch eine Aufreißverpackung nach Anspruch 1 gelöst. Bei der Bildung der Verbundfolie werden die kerbartigen Schwächungslinien lediglich in die aus einem zähen Kunststoff bestehende Innenfolie eingebracht und bewirken entlang vorgegebener Linien, an denen die Verpackung aufreißen soll, eine Schwächung dieser zähen Schicht.

Die Innenschicht besteht aus einem Polyolefin, insbesondere einem Polyethylen, oder Polypropylen. Als Außenfolie kann ein Polyester (PET), ein Polyester/Metallfolien-Verbund oder bi-axial orientiertes Polypropylen verwendet werden.

Die kerbartig eingeformte Schwächungslinien aufweisende Innenfolie kann als flächige Bahn auf die Außenfolie aufkaschiert werden. Im Rahmen der Erfindung liegt es aber auch, die Innenfolie nur als Streifen auf eine größere aus der Außenfolie bestehende Fläche aufzukaschieren.

Gegenstand der Erfindung ist auch ein Verfahren zur Herstellung der beschriebenen Verbundfolie. Erfindungsgemäß wird in eine Folie aus einem zähen Kunststoff, welche als Innenfolie die Innenseite der Aufreißverpackung bildet, kerbartige Schwächungslinien als Aufreißhilfen zum Öffnen der aus der Verbundfolie gefertigten Verpackungen eingeformt. Anschließend wird die Innenfolie auf eine die Verpackungsaußenseite bildende ein- oder mehrschichtige Außenfolie aufkaschiert. Diese besitzt eine im Vergleich zur Innenfolie geringe Zähigkeit. Zur Herstellung der kerbartigen Schwächungslinien werden vorzugsweise Räder zum Abkanten von Flächenerzeugnissen verwendet, die auch als Creaser-Räder bezeichnet werden. Im Rahmen der Erfindung liegt es auch, dass die Innenfolie als Streifen auf eine von der Außenfolie gebildete größere Fläche aufkaschiert wird.

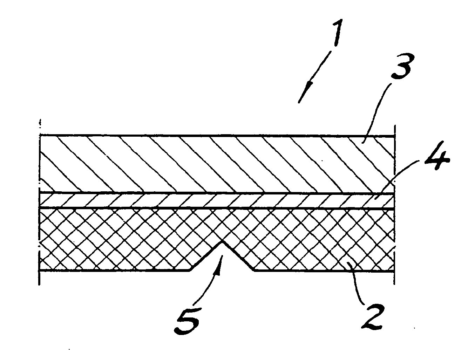

Im Folgenden wird die Erfindung anhand einer lediglich ein Ausführungsbeispiel darstellenden Zeichnung erläutert. Die einzige Figur zeigt schematisch den Schichtenaufbau einer erfindungsgemäßen Verbundfolie.

Die Verbundfolie 1 ist für Aufreißverpackungen bestimmt und besteht aus einer die Verpackungsinnenseite bildenden Innenfolie 2 aus einem zähen Kunststoff und einer auf die Innenfolie aufkaschierten Außenfolie 3, die eine im Vergleich zur Innenfolie 2 geringere Zähigkeit besitzt. Die Außenfolie 3 kann einschichtig oder mehrschichtig ausgebildet sein und besteht im Ausführungsbeispiel aus einer Schicht aus Polyester (PET). Sie ist durch eine Klebstoffschicht 4 mit der Innenfolie 2 verbunden.

Die Innenfolie 2 besteht aus einem Polyolefin, insbesondere einem Polyethylen oder Polypropylen, und weist kerbartig eingeformte Schwächungslinien 5 als Aufreißhilfe zum Öffnen von aus der Verbundfolie 1 gefertigten Verpackungen auf. Die kerbartigen Schwächungslinien 5, von denen in der Figur lediglich eine beispielhaft dargestellt ist, werden mit sogenannten Creaser-Rädern in die Innenfolie 2 eingebracht, bevor die die Verpackungsaußenseite bildende Außenfolie 3 aufkaschiert wird.

## Patentansprüche

1. Aufreißverpackung mit einer Verbundfolie, wobei die Verbundfolie
eine die Verpackungsinnenseite bildende Innenfolie (2) aus einem zähen Kunststoff, nämlich einem Polyolefin, und
eine auf die Innenfolie (2) aufkaschierte ein- oder mehrschichtige Außenfolie (3), die eine im Vergleich zur Innenfolie (2) geringere Zähigkeit besitzt, aufweist,
**dadurch gekennzeichnet, dass** die Innenfolie (2) eine kerbartig eingeformte Schwächungslinie (5) als Aufreißhilfe aufweist, wobei bei einem Öffnen der Verpackung die Verbundfolie entlang der vorgegebenen Linie, an der die Innenfolie geschwächt ist, einreißt.

2. Aufreißverpackung nach Anspruch 1, **dadurch gekennzeichnet, dass** die Außenfolie (3) aus einem Polyester, aus einem Polyester/Metallfolien-Verbund oder aus bi-axial orientiertem Polypropylen besteht.

3. Aufreißverpackung nach Anspruch 2, **dadurch gekennzeichnet, dass** die kerbartig eingeformte Schwächungslinien (5) aufweisende Innenfolie (2) als Streifen auf eine größere, aus der Außenfolie (3) bestehende Fläche aufkaschiert ist.

4. Verfahren zur Herstellung einer Verbundfolie für Aufreißverpackungen nach einem der Ansprüche 1 bis 3, wobei in eine Folie aus einem zähen Kunststoff, nämlich einem Polyolefin, welche als Innenfolie die Innenseite der Aufreißverpackung bildet, kerbartige Schwächungslinien aus Aufreißhilfe zum Öffnen der aus der Verbundfolie gefertigten Verpackungen eingeformt werden, und wobei die Innenfolie anschließend auf eine die Verpackungsaußenseite bildende ein- oder mehrschichtige Außenfolie aufkaschiert wird, die eine im Vergleich zur Innenfolie geringere Zähigkeit besitzt.

5. Verfahren nach Anspruch 4, wobei zur Herstellung der Schwächungslinien Räder zum Abkanten von Flächenerzeugnissen verwendet werden.

6. Verfahren nach Anspruch 4 oder 5, wobei die Innenfolie (2) als Streifen auf eine von der Außenfolie (3) gebildete größere Fläche aufkaschiert wird.

## Claims

1. Tear-open packaging with a composite film, wherein the composite film comprises
an inner film (2) forming the inside of the packaging made from a ductile plastic, namely a polyolefin, and
a single or multi-layered outer film (3) laminated onto the inner film (2), which has a lower degree of ductility compared with the inner film (2),
**characterised in that** the inner film (2) has a line of weakness (5) formed by notches as an aid to tearing, wherein the composite film tears along the prescribed line, where the inner film is weakened, when the packaging is opened.

2. The tear-open packaging according to claim 1, **characterised in that** the outer film (3) is made from a polyester, a polyester/metal film composite or biaxially-oriented polypropylene.

3. The tear-open packaging according to claim 2, **characterised in that** the inner film (2) with the lines of weakness (5) formed by notches is laminated as a strip onto a larger area made from the outer film (3).

4. A method of producing a composite layer for tear-open packaging according to one of the claims 1 to 3, wherein in a film made from a ductile plastic, namely a polyolefin, which forms the inside of the tear-open packaging as the inner film, notch-like lines of weakness are formed as an aid to tearing open the packaging made from composite film and wherein the inner film is then laminated onto a single or multilayer outer film forming the outside of the packaging, which has a lower degree of toughness compared with the inner film.

5. The method according to claim 4, wherein wheels provided to trim planar products are used in producing the lines of weakness.

6. The method according to claim 4 or 5, wherein the inner film (2) is laminated as a strip onto a larger surface formed by the outer film (3).

## Revendications

1. Emballage à déchirer, avec un film composite, le film composite
comportant un film intérieur (2) en une matière plastique tenace, à savoir une polyoléfine, et
un film extérieur (3) monocouche ou multicouches contrecollé sur le film intérieur (2), qui en comparaison du film intérieur (2) fait preuve d'une moindre ténacité,
**caractérisé en ce que** le film intérieur (2) comporte en tant qu'aide au déchirement une ligne d'affaiblissement (5) ménagée de type encoche, lors d'une ouverture de l'emballage, le film composite se déchirant le long de la ligne prédéfinie, sur laquelle le film intérieur est affaibli.

2. Emballage à déchirer selon la revendication 1, **caractérisé en ce que** le film extérieur (3) consiste dans un polyester, dans un composite polyester/films métalliques ou dans un polypropylène à orientation biaxiale.

3. Emballage à déchirer selon la revendication 2, **caractérisé en ce** le film intérieur (2) comportant la ligne d'affaiblissement (5) ménagée en de type encoche est contrecollé en tant que bande sur une surface plus grande, consistant dans le film extérieur (3).

4. Procédé de fabrication d'un film composite pour des emballages à déchirer selon l'une quelconque des revendications 1 à 3, pour ouvrir les emballages fabriqués dans le film composite, des lignes d'affaiblissement de type encoches étant ménagées en tant qu'aide au déchirement dans un film en une matière plastique tenace, à savoir une polyoléfine, qui en tant que film intérieur forme la face intérieure de l'emballage à déchirer, le film intérieur étant ensuite contrecollé sur un film extérieur monocouche ou multicouches formant la face extérieure de l'emballage qui fait preuve d'une moindre ténacité en comparaison du film intérieur.

5. Procédé selon la revendication 4, pour la création des lignes d'affaiblissement des roues étant utilisées pour chanfreiner des produits surfaciques.

6. Procédé selon la revendication 4 ou 5, le film intérieur (2) étant contrecollé en tant que bande sur une surface plus grande formée par le film extérieur (3).
